# EUROPEAN PATENT SPECIFICATION

(11) **EP 3 735 883 B1**
(45) Date of publication and mention of the grant of the patent: **07.12.2022**
(21) Application number: 20171268.4
(22) Date of filing: 24.04.2020
(51) Int. Cl.: A47J 43/25, B26D 3/11

(54) **KIT, KITCHEN APPLIANCE AND METHOD FOR SPIRALIZING A FOODSTUFF**
KIT, KÜCHENGERÄT UND VERFAHREN ZUM SPIRALISIEREN EINES LEBENSMITTELS
KIT, APPAREIL DE CUISINE ET PROCÉDÉ POUR SPIRALISER DES ALIMENTS

(30) Priority: 06.05.2019 EP 19172790
(43) Date of publication of application: 11.11.2020
(73) Proprietor: Koninklijke Philips N.V., 5656 AG Eindhoven (NL)
(72) Inventor: QUINESSER, Albert, 5656 AE Eindhoven (NL); FELSBERGER, Herbert, 5656 AE Eindhoven (NL); KRAMMER, Erich, 5656 AE Eindhoven (NL)
(74) Representative: de Vries, Janna

(56) References cited:
- CN-A- 106 983 398
- DE-U1-202015 000 837
- DE-U1-202015 000 837
- DE-U1-202017 107 181
- DE-U1-202017 107 181
- US-A- 5 784 942
- US-A1- 2018 015 623

## Description

### FIELD OF THE INVENTION

This invention relates to a kit, kitchen appliance and method for spiralizing a foodstuff.

### BACKGROUND OF THE INVENTION

In recent years, the process of spiralizing foodstuffs, e.g. fruits and vegetables, has grown in popularity. This has been driven by the need for consumption of healthy fresh food in the daily routine. As the name suggests, spiralizing involves slicing a foodstuff into strips resembling spirals. This effect is achieved by advancing the foodstuff towards a cutter whilst rotating either the foodstuff or the cutter.

Various devices for spiralizing foodstuffs have been brought to market. Such devices may be categorized into manually operated tools which do not include an electrical motor, and electrical spiralizing appliances.

Continuous rotation is required in order to attain suitably long strips, and thus what is perceived as a good-quality spiralizing result. A weakness of manually operated tools is that the length of the strips may be restricted by the maximum continuous twist which can be performed by hand, e.g. using a suitable handle or simply grasping the foodstuff and twisting it against the cutter. The interruptions to the twisting resulting from the user having to reset his or her grip on the handle or foodstuff may also lead to unwanted inhomogeneity in the sliced product. This inhomogeneity may correspond to a change in diameter or length of the strips, buckles in the strips, flat unspiraled portions in the strips, etc.

Conventional electrical spiralizing appliances either have a rotating cutter or use a rotating foodstuff engagement tool which is mounted on a handheld electrical device. Whilst such devices may offer advantages over manually operated tools because the motor-driven rotation of the cutter or foodstuff is continuous, such appliances have certain drawbacks.

In particular, the rotating cutter risks causing injuries, and is difficult to clean. Cleaning the cutter tends to require first disengaging the cutter from the drive shaft of the appliance, which may be difficult and hazardous.

On the other hand, the handheld electrical device having the rotating foodstuff engagement tool requires the user to hold the device, including the motor and related circuitry, and the engaged foodstuff in their hands. Having to manually support the device and the foodstuff in this manner may be difficult due, in particular, to the weight of the device. Handling the device during rotating of the foodstuff may also be difficult, and thus the user-friendliness and slicing performance of the device may be compromised.

CN106983398A discloses a spiralizing appliance with a base unit, including a rotating foodstuff engagement tool and a cutter that is slideably supported on a guide post that extends upward from the base unit. The cutter can be slid downward along the guide post into contact with the rotating food, via a motor- or hand driven spindle, by gravity or by manual pressure.

The present invention seeks to address at least some of the abovementioned problems encountered with conventional spiralizing appliances.

### SUMMARY OF THE INVENTION

The invention is defined by the claims.

According to an aspect there is provided a kit for providing a kitchen appliance having a rotational drive system in a base unit thereof with a spiralizing function which enables slicing of a foodstuff into at least one strip, the kit comprising: a foodstuff engagement member adapted to engage with both the drive system and the foodstuff so as to enable the foodstuff to be rotated by the drive system; and a handheld utensil for pressing onto the foodstuff as the foodstuff is being rotated, the handheld utensil comprising: a housing having an inner surface defining a cavity for receiving the rotating foodstuff, and a graspable outer surface; and a cutter mounted in the cavity, the cutter being arranged to contact the foodstuff when the handheld utensil is being pressed onto the rotating foodstuff so as to enable slicing of the foodstuff into the at least one strip.

The kit enables spiralizing of foodstuffs, e.g. fruits and vegetables, using a kitchen appliance having a base unit equipped with a rotational drive system. The foodstuff engagement member permits rotation of the foodstuff by the drive system. By virtue of the cutter being mounted within the cavity, the housing of the handheld utensil effectively protects the user from injury by inadvertent contact with the cutter. Moreover, the handheld utensil enables the user to make safe adjustments to the pressure being applied to the rotating foodstuff because the cavity, in which the rotating foodstuff is located, serves to minimize the risk of the foodstuff becoming freed from the handheld utensil during spiralizing.

The handheld utensil may comprise an aperture delimited by the housing, the aperture being adjacent the cutter so as to permit the at least one strip to exit the handheld utensil.

The foodstuff engagement member may comprise a plurality of projections for penetrating into the foodstuff. Such projections may enable facile engagement of the foodstuff with the foodstuff engagement member, and convenient removal of any unspiralized remainder of the foodstuff from the foodstuff engagement member following spiralizing.

The graspable outer surface may comprise a grip portion including a non-slip plastic or rubber. The grip portion may assist the user to grip the handheld utensil, so as to enhance user control and safety during spiralizing.

The cutter may be statically mounted in the cavity. Such static mounting may also, i.e. in addition to the cutter being enclosed within the cavity, assist to prevent accidental injury, and thus provides an advantage over conventional spiralizers having rotating blades. Moreover, a statically mounted cutter may obviate the requirement for any motorized components within the handheld utensil, such that the handheld utensil may be relatively lightweight.

The cutter may be mounted at the base of the cavity. The foodstuff may initially be admitted into the cavity via an opening. The cavity may thus extend from the opening to the base of the cavity, which base opposes the opening. By positioning the cutter at the base of the cavity, the risk of accidental injury by contact with the cutter may be lessened.

The cutter may, for example, comprise a conical slicing disc arranged such that the cone narrows in the direction of the base of the cavity. The conical shape of the slicing disc may assist the rotating foodstuff to remain within the cavity during spiralizing, and to center the foodstuff within the cavity during spiralizing.

The cavity may be a sliding fit over the foodstuff engagement member. This may enable more complete spiralizing of the foodstuff, because advancing of the cutter in the direction of the rotating foodstuff is not terminated due to contact between a bottom portion of the handheld utensil, which extends around the opening of the cavity, and a top portion of the foodstuff engagement member. Rather, such a sliding fit may ensure that spiralizing continues beyond the point at which the bottom portion of the handheld utensil aligns with the top portion of the foodstuff engagement member, so that more of the foodstuff is spiralized.

According to another aspect there is provided a kitchen appliance having a spiralizing function which enables slicing of a foodstuff into at least one strip, the kitchen appliance comprising: a base unit having a rotational drive system; and a kit as defined above.

The kitchen appliance may comprise a pressure switch adapted to trigger rotation of the drive system in response to a pressure being applied to the foodstuff via the handheld utensil. The pressure switch may be further adapted to cause rotation of the drive system to cease when the pressure is no longer being applied to the foodstuff via the handheld utensil. The pressure switch may, for example, comprise a simple spring-loaded on/off switch, which is actuated by a downwards movement of the foodstuff engagement member relative to the base unit resulting from the user pressing the handheld utensil onto the foodstuff.

Alternatively or additionally, the kitchen appliance may comprise: a sensor for sensing the pressure applied to the foodstuff via the handheld utensil; and a controller in communication with the sensor, the controller being configured to control the drive system in response to the pressure sensed by the sensor. The sensor may, for instance, be mounted in the base unit. The pressure applied to the foodstuff by the user may thus be used to control the drive system. This may, for instance, enhance the safety and ease of operation of the kitchen appliance during spiralizing.

The controller may be configured to: trigger rotation of the drive system when the pressure sensed by the sensor reaches or exceeds a threshold pressure; and stop or prevent rotation of the drive system when the pressure sensed by the sensor is below the threshold pressure.

Accordingly, the rotation of the foodstuff may only be initiated upon pressing of the handheld utensil onto the foodstuff, providing this pressure is sufficient to reach or exceed the predetermined threshold pressure, or trigger the spring-loaded on/off switch. The controller ceases rotation of the foodstuff once the pressure exerted on foodstuff decreases below the predetermined threshold pressure, i.e. when the user stops pressing on the foodstuff via the handheld utensil. This is particularly advantageous because the user may use both hands to manipulate the handheld utensil, rather than, for instance, needing to remove a hand from the handheld utensil in order to operate a switch on the base unit which triggers rotation of the drive system. Being able to maintain contact with the handheld utensil with both hands means that the user may exert greater control over the pressure he or she is applying during spiralizing. Two-handed control over the handheld utensil may also make for safer spiralizing using the kitchen appliance.

The kitchen appliance may comprise a container for receiving the at least one strip from the handheld utensil, wherein the container is detachably mounted on the base unit. Following spiralizing, the container may be detached from the base unit and, for instance, used to serve the spiralized foodstuff.

According to a further aspect, there is provided a method of slicing a foodstuff into at least one strip using a kitchen appliance having a rotational drive system in a base unit thereof, a foodstuff engagement member, and a handheld utensil comprising an outer surface and an inner surface defining a cavity in which a cutter is mounted, the method comprising: engaging the foodstuff engagement member with the drive system; engaging the foodstuff engagement member with the foodstuff so as to enable the foodstuff to be rotated by the drive system; grasping the outer surface of the handheld utensil; receiving the engaged foodstuff in the cavity of the handheld utensil; applying a manual force to the outer surface such that the cutter is pressed onto the foodstuff; and rotating the foodstuff using the drive system such that the cutter slices the foodstuff into the at least one strip.

The method may further comprise sensing a pressure applied during the applying, wherein the rotating comprises controlling the drive system in response to the sensed pressure.

The controlling may comprise: triggering rotation of the drive system when the sensed pressure reaches or exceeds a threshold pressure; and stopping or preventing rotation of the drive system when the sensed pressure is below the threshold pressure.

### BRIEF DESCRIPTION OF THE DRAWINGS

Embodiments of the invention are described in more detail and by way of non-limiting examples with reference to the accompanying drawings, wherein:
FIG. 1 shows a kit according to an embodiment;
FIG. 2 shows a kitchen appliance according to an embodiment;
FIG. 3 shows a kitchen appliance according to another embodiment;
FIG. 4 shows use of the kitchen appliance shown in FIG. 3;
FIG. 5 shows a block diagram of a kitchen appliance according to an embodiment;
FIG. 6 shows a flowchart of a method according to an embodiment; and
FIG. 7 shows a general computer architecture suitable for implementing the controller used in the kitchen appliance.

### DETAILED DESCRIPTION OF THE EMBODIMENTS

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a kit for providing a kitchen appliance having a rotational drive system in a base unit thereof with a spiralizing function. The spiralizing function enables slicing of a foodstuff into a strip or strips. The kit comprises a foodstuff engagement member which engages with the drive system. The foodstuff engagement member further engages with the foodstuff so that the foodstuff can be rotated by the drive system. The kit includes a handheld utensil having a housing. An outer surface of the housing can be gripped by the user so that the handheld utensil can be pressed onto the rotating foodstuff. An inner surface of the housing defines a cavity which receives the rotating foodstuff. A cutter is mounted in the cavity. As the handheld utensil is being pressed onto the rotating foodstuff, the cutter contacts and slices the foodstuff into the strip(s).

The kit enables spiralizing of foodstuffs, e.g. fruits and vegetables, using a kitchen appliance having a base unit equipped with a rotational drive system. The foodstuff engagement member permits rotation of the foodstuff by the drive system. By virtue of the cutter being mounted within the cavity, the housing of the handheld utensil effectively protects the user from injury by inadvertent contact with the cutter. Moreover, the handheld utensil enables the user to make safe adjustments to the pressure being applied to the rotating foodstuff because the cavity, in which the rotating foodstuff is located, serves to minimize the risk of the foodstuff becoming freed from the handheld utensil during spiralizing. The handheld utensil further benefits from being straightforward to clean following use. The kit enables conversion of a kitchen appliance into a spiralizer in a simple manner, with the required number of components being kept to a minimum.

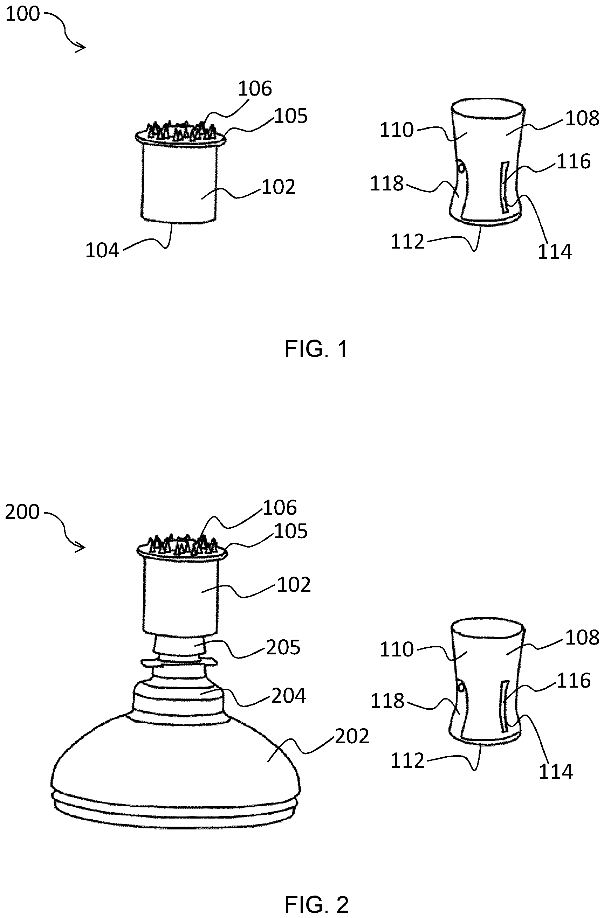

FIG. 1 shows a kit 100 according to an embodiment. The kit 100 is compatible with a kitchen appliance (not shown in FIG. 1) having a rotational drive system which is mounted in a base unit of the kitchen appliance. In this respect, the kit 100 includes a foodstuff engagement member 102 which engages with the drive system. The foodstuff engagement member 102 is shown in the left-hand pane of FIG. 1.

The foodstuff engagement member 102 may, for example, include a coupler 104 which engages with a drive shaft (not shown in FIG. 1) protruding from the base unit of the kitchen appliance, which drive shaft is driven by the drive system. The coupler 104 may, for instance, include a recess dimensioned to receive at least a portion of the drive shaft, and a releasable locking mechanism for retaining the drive shaft within the recess during rotation. In this manner, the drive system may rotate the foodstuff engagement member 102. Alternative means of coupling the drive system to the foodstuff engagement member 102 so as to enable rotation of the foodstuff engagement member 102 by the drive system will be immediately apparent to the skilled person.

As shown in FIG. 1, the foodstuff engagement member 102 includes a plate 105 which carries a plurality of projections 106. The projections 106 penetrate into the foodstuff intended to be spiralized, and thus enable the foodstuff engagement member 102 to engage with the foodstuff. Using the projections 106 to engage the foodstuff may enable facile engagement of the foodstuff with the foodstuff engagement member 102, and convenient removal of any unspiralized remainder of the foodstuff from the foodstuff engagement member 102 following spiralizing.

The projections 106 may comprise any suitable shape, providing they are able to penetrate the foodstuff, and thus transfer the rotation of the drive system to the foodstuff. The projection 106 may, for example, be in the form of ribs or beads on the surface of the plate 105. In the example shown in FIG. 1, at least some of the projections 106 have a shape which tapers in the direction of the foodstuff, thereby facilitating penetration of the projections 106 into the foodstuff.

The projections 106 need not be all the same size and shape. For example, a larger projection 106, e.g. having a cross shape, may be located in a central region of the plate 105, with smaller additional projections 106 positioned further towards the periphery of the plate 105. In such a scenario, the larger projection 106 may be primarily responsible for transferring rotation from the drive system to the foodstuff. The smaller additional projections 106 may provide supplementary anchoring of the foodstuff to the foodstuff engagement member 102. Alternative arrangements, sizes and shapes of projections 106 will be readily apparent to the skilled person.

As an alternative or in addition to the protrusions 106 shown in FIG. 1, further means for engaging the foodstuff may also be contemplated. For example, the foodstuff engagement member 102 may include a clamp, a vice, a chuck etc., for securing the foodstuff to the foodstuff engagement member 102. Whilst such components may make for a more complicated and costly design, they may ensure more secure engagement of the foodstuff, which may assist spiralizing because the rotating foodstuff is less liable to slip on the foodstuff engagement member 102 during slicing.

The foodstuff engagement member 102 may be formed of any suitable material, such as a plastic, metal or metal alloy, e.g. stainless steel. When the foodstuff engagement member 102 includes the protrusions 106, the protrusions 106 may be formed of material which is the same as or different to that used for the other components of the foodstuff engagement member 102. In a non-limiting example, the entire foodstuff engagement member 102 is formed from a plastic, e.g. via a suitable molding process.

The kit 100 further includes a handheld utensil 108, which is shown in the right-hand pane of FIG. 1. The handheld utensil 108 comprises a housing 110 having an outer surface and an inner surface. The outer surface corresponds to the surface which is grasped or gripped by the user during spiralizing. The outer surface may thus, for instance, be shaped in such a way that the handheld utensil 108 is comfortable for the user to hold. In this respect, the handheld utensil 108 as shown in FIG. 1 has a shape approximating a hyperboloid, which may be particularly easy to grasp, and grip during spiralizing. Alternative ergonomic outer surface designs, such as including recessed portions for accommodating the digits of a user, may be contemplated.

The inner surface of the housing 110 defines a cavity 112 which receives the rotating foodstuff during spiralizing. A cutter 114 is mounted in the cavity 112. As the handheld utensil 108 is being pressed onto the rotating foodstuff, the cutter 114 contacts and slices the foodstuff into a strip or strips. Locating the cutter 114 within the cavity 112 provides the advantage that the user, grasping the handheld utensil 108 by the outer surface of the housing 110, is protected from injury caused by inadvertent contact with the cutter 114. The housing 110 effectively provides a barrier between the user, e.g. the user's hands, and the cutter 114.

In an embodiment, the cutter 114 is statically mounted in the cavity 112. Such static mounting may also, i.e. in addition to the cutter 114 being enclosed within the cavity 112, assist to prevent accidental injury, and thus provides an advantage over conventional spiralizers having rotating blades. Moreover, a statically mounted cutter 114 obviates the requirement for any motorized components within the handheld utensil 108, such that the handheld utensil 108 may be relatively lightweight. By ensuring that the handheld utensil 108 is relatively lightweight, the ease and safety with which the user manipulates the handheld utensil 108 during use may be enhanced.

The foodstuff is first admitted into the cavity 112 via an opening. The cavity 112 extends from the opening to the base of the cavity 112, which base opposes the opening. In an embodiment, the cutter 114 is mounted at the base of the cavity 112. By positioning the cutter 114 at the base of the cavity 112 in this manner, the risk of accidental injury by contact with the cutter 114 may be lessened because the user is less likely to inadvertently extend their hands/digits all the way to the base of the cavity 112.

Alternatively, the cutter 114 may be mounted between the opening and the base of the cavity 112 so that the cutter 114 is sufficiently accessible for cleaning following spiralizing.
The cutter 114 may, for example, comprise a conical slicing disc arranged such that the cone narrows in the direction of the base of the cavity 112. The conical shape of the slicing disc may assist the rotating foodstuff to remain within the cavity 112 during spiralizing, and to center the foodstuff within the cavity 112 during spiralizing. Such centering may be particularly useful when it is desired to spiralize relatively thin, i.e. relatively small diameter, foodstuffs, such as carrots. Such relatively thin foodstuffs may otherwise risk becoming misaligned in relation to the cutter 114 so that a less, or incomplete, spiralizing result is attained.

In the non-limiting example shown in FIG. 1, the handheld utensil 108 has an aperture 116 which is delimited by the housing 110. The aperture 116 is adjacent the cutter 114 so as to permit the strip(s) to exit the handheld utensil 108 during spiralizing. The aperture 116 in this example is an elongate slot in the housing 110, which slot extends from a point proximal to the opening of the cavity 112 towards the base of the cavity 112.

The cutter 114 may extend, within the cavity 112, along the length of the elongate slot 116. The slot 116 may be sufficiently wide so as to permit the strip(s) to exit the handheld utensil 108, but narrow enough to prevent the user's digits from reaching into the cavity 112 via the slot 116. In this respect, the slot may, for example, have a width of 3 to 10 mm, such as about 5 mm. In this manner, the dimensions of the slot 116 may assist to minimize the risk of inadvertent contact with the cutter 114. Alternative aperture shapes, i.e. other than slot-shaped are also conceivable, e.g. round, elliptical, square, etc.

The cutter 114 may comprise a suitable blade for slicing the rotating foodstuff into a strip or strips. Such a blade may, for instance, be made of a metal, a metal alloy, a ceramic, etc. The blade may be serrated or may not have any serrations, depending on the type of foodstuff which is intended to be spiralized, the desired shape and size of the spiralized foodstuff, etc. The handheld utensil 108 may, for instance, be equipped with different, e.g. detachable, cutters 114 according to the desired shape and thickness of the strip(s). In other words, different cutters 114 may be used to cut the foodstuff into differently sized "noodles": spaghetti, ribbons, etc.

Alternatively or additionally, the kit 100 may include a plurality of handheld utensils 108, with each respective cutter 114 of the handheld utensils 108 being capable of producing a different spiralizing effect from the other(s). Suitable cutter designs and blades for spiralizing foodstuffs are well-known per se, and will not be further described herein for the sake of brevity only.

The housing 110 may be formed of any suitable material such as a plastic, rubber, metal or metal alloy. Such materials may assist the housing 110 to protect the user from the cutter 114. In an embodiment, the outer surface comprises a grip portion 118 including a non-slip plastic or rubber. Accordingly, the material used to fabricate the housing 110, or at least the material which is included in the outer surface may assist the user to grip the handheld utensil 108. As shown in FIG. 1, the non-slip plastic or rubber may only be present in a portion 118 of the outer surface, e.g. in order to guide the user as to where to position his hands/digits when grasping the handheld utensil 108. Alternatively, the non-slip plastic or rubber may, for instance, be present over the entirety of the outer surface.

In an embodiment, the cavity 112 is a sliding fit over the foodstuff engagement member 102. In other words, the cavity 112 may be dimensioned to receive the foodstuff engagement member 102. This may enable more complete spiralizing of the foodstuff, because advancing of the cutter 114 in the direction of the rotating foodstuff is not terminated due to contact between a bottom portion of the handheld utensil 108, which extends around the opening of the cavity 112, and a top portion of the foodstuff engagement member 102. Rather, such a sliding fit may ensure that spiralizing continues beyond the point at which the bottom portion of the handheld utensil 108 aligns with the top portion of the foodstuff engagement member 102, so that more of the foodstuff is spiralized.

FIG. 2 shows a kitchen appliance 200 according to an embodiment. The kitchen appliance 200 comprises the kit 100 described above in relation to FIG. 1. The kitchen appliance 200 further comprises a base unit 202, which is designed to rest, for instance, on the kitchen worktop during use. For this reason, the base unit 202 may include suitable feet (not shown), e.g. rubber suction feet, which contact the worktop, and may avoid slipping of the base unit 202 on the worktop during use.

The base unit 202 includes a rotational drive system 204. The components of the rotational drive system 204 may thus be housed within the base unit 202. The rotational drive system 204 may, for example, include an electrical motor. The motor may be supplied with power via the mains or a battery. The continuous rotation provided by the drive system 204 may ensure a smooth and continuous cutting process, creating long and delicious spiraled fruits and vegetables.

In FIG. 2, the foodstuff engagement member 102 is engaged with the drive system 204. The rotation provided by the drive system 204 is transferred to the foodstuff engagement member 102 via a drive shaft 205. In this example, the drive shaft 205 engages with the foodstuff engagement member 102 via the coupler 104, e.g. by locking the drive shaft 205 into a suitably dimensioned recess in the foodstuff engagement member 102, as previously described.

The drive shaft 205 preferably extends upwardly from the worktop on which the base unit 202 is mounted. The kitchen appliance 200 may therefore be regarded as a "bottom driven food-processing appliance". This means that during spiralizing, the user presses the handheld utensil 108 downwardly onto the rotating foodstuff. This arrangement benefits from gravity assisting the user to press the handheld utensil 108 onto the rotating foodstuff. In this non-limiting example, the kitchen appliance 200 does not therefore require further components for advancing the foodstuff, such as an infeed slider or a screw feed.

Slicing from top to bottom in this manner may have a more logical and intuitive feel from the point of view of the user. The slicing progress is also visually apparent to the user, i.e. by how far the handheld utensil 108 has advanced towards the base unit 202, so as to assist the user to control the pressure he or she is applying during spiralizing. Moreover, the intuitive ordering of the handheld utensil 108, the foodstuff, and the foodstuff engagement member 102 when the kitchen appliance 200 is converted for spiralizing using the kit 100 may serve to motivate the user to operate the kitchen appliance 200 correctly for spiralizing.

The provision of the kit 100 and the base unit 202 as separate components may have advantages in terms of cleaning the kitchen appliance 200 following spiralizing. The foodstuff engagement member 102 and the handheld utensil 108 may thus be cleaned separately from the base unit 202 after use. As well as being easy to handle during spiralizing, the components of the kit 100 may therefore facilitate cleaning of the kitchen appliance 200 following use.

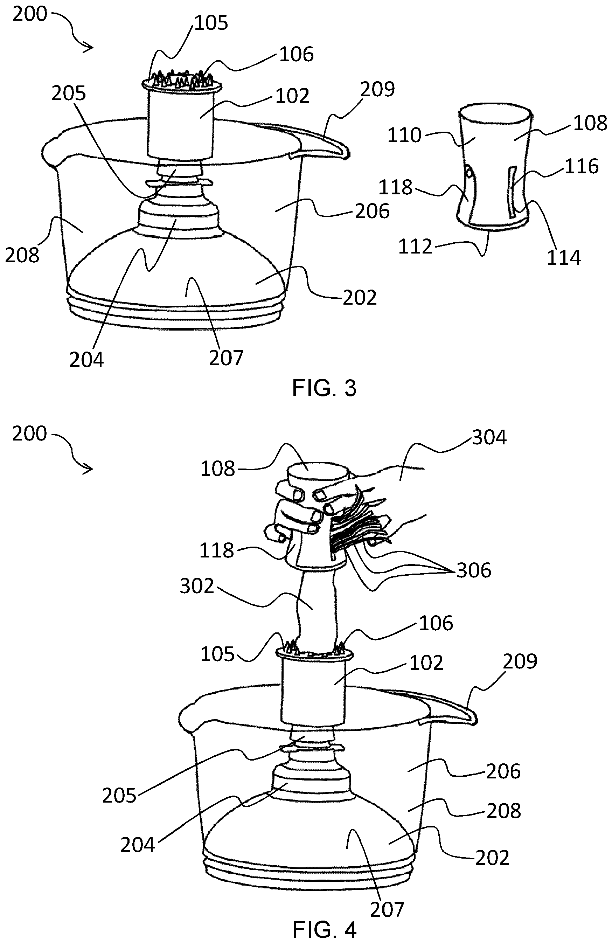

FIG. 3 shows a kitchen appliance 200 according to another embodiment. In this case, the kitchen appliance 200 comprises a container 206 for receiving the strip(s) from the handheld utensil 108. The container 206 may be detachably mounted on the base unit 202.
The floor 207 of the container 206 may, for instance, follow the contours of the base unit 202, which may accommodate the drive system 204. As shown in FIG. 3, a side wall 208 of the container 206 adjoins the floor 207. The container 206 may include a handle 209 to assist with detaching the container 206 from the base unit 202, e.g. following spiralizing.
The container 206 may be made of any suitable material such as a plastic, e.g. a transparent plastic such that the user may view the progress of filling of the container 206 with the spiralized foodstuff.

FIG. 4 schematically depicts spiralizing using the kitchen appliance 200 shown in FIG. 3. The foodstuff engagement member 102 engages the drive system 204 of the base unit 202. The foodstuff engagement member 102 further engages a foodstuff 302, in this case via the projections 106 extending from the plate 105 of the foodstuff engagement member 102. In this manner, the drive system 204 rotates the foodstuff 302 via the foodstuff engagement member 102.

As shown in FIG. 4, the handheld utensil 108 is grasped in the hands 304 of the user. The foodstuff 302 is received into the cavity 112 of the handheld utensil 108. The user applies force to the outer surface of the housing 110 such that the rotating foodstuff 302 contacts and is sliced by the cutter 114 mounted within the cavity 112. The resulting strips 306 exit the handheld utensil 108 via the aperture 116. The strips 306 may subsequently drop into the container 206 mounted on the base unit 202.

The kitchen appliance 200 shown in FIGs. 2-4 does not include any additional component for anchoring the handheld utensil 108 to the base unit 202, which may enhance the maneuverability of the handheld utensil 108 during use. However, this is not intended to be limiting. An attachment member may, for instance, be included in the kit 100 for securing the handheld utensil 108 to the base unit 202. The attachment member may, for example, include a sliding element to enable the attached handheld utensil 108 to be advanced towards the base unit 202 during spiralizing.

Following spiralizing, the container 206 may be detached from the base unit 202 and, for instance, used to serve the spiralized foodstuff 306. Other ingredients, e.g. a suitable dressing for the spiralized foodstuff 306, may be added directly into the container 206 prior to serving, or prior to spiralizing.

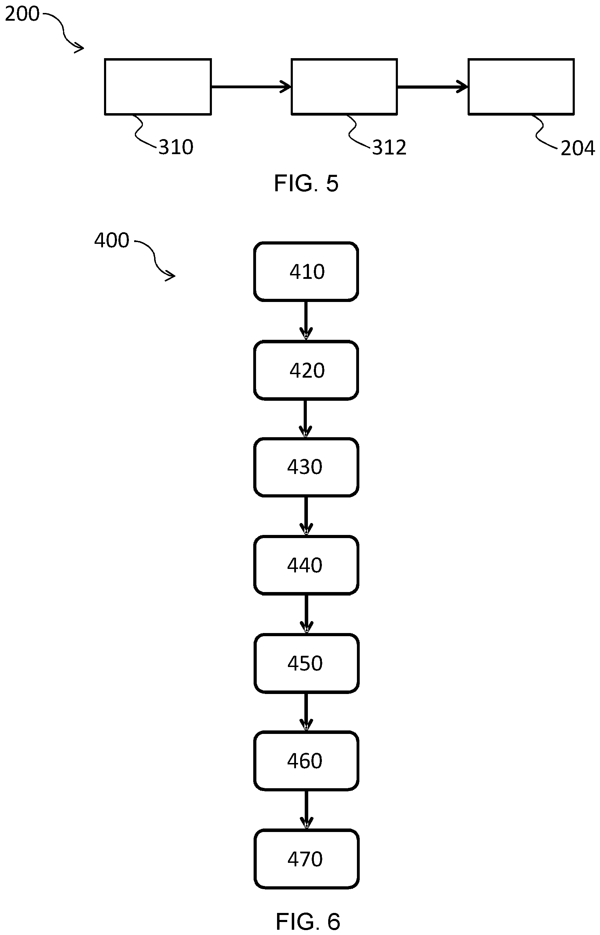

FIG. 5 provides a block diagram of a kitchen appliance 200 according to an embodiment. In this case, the kitchen appliance 200 includes a sensor 310 for sensing the pressure applied to the foodstuff via the handheld utensil 108. The sensor 310 may, for instance, be mounted in the base unit 202. Alternative locations for the sensor 310, such as in the foodstuff engagement member 102, may also be contemplated.

Any suitable sensor 310 may be used for this purpose, providing the sensor 310 is capable of sensing the pressure exerted by the user on the foodstuff using the handheld utensil 108. The sensor 310 is in communication with a controller 312. The pressure information passing from the sensor 310 to the controller 312 is represented in FIG. 5 by the arrow between the respective blocks 310 and 312.

The controller 312 is configured to control the drive system 204 in response to the pressure sensed by the sensor 310. To this end, the controller 312 may send a control signal to the drive system 204, as represented in FIG. 5 by the arrow between the respective blocks 312 and 204.

In an embodiment, the controller 312 is configured to trigger rotation of the drive system 204 when the pressure sensed by the sensor 310 reaches or exceeds a threshold pressure. The controller 312 is further configured to stop or prevent rotation of the drive system 204 when the pressure sensed by the sensor 310 is below the threshold pressure. Accordingly, the rotation of the foodstuff 302 may only be initiated upon pressing of the handheld utensil 108 onto the foodstuff 302, providing this pressure is sufficient to reach or exceed the predetermined threshold pressure. The controller 312 ceases rotation of the foodstuff 302 once the pressure exerted on foodstuff 302 decreases below the predetermined threshold pressure, i.e. when the user stops pressing on the foodstuff 302 via the handheld utensil 108.

Alternatively or additionally, the kitchen appliance 200 may comprise a pressure switch (not shown) which triggers rotation of the drive system 204 in response to a pressure being applied to the foodstuff via the handheld utensil 108. The pressure switch may, for example, also cause rotation of the drive system 204 to cease when the pressure is no longer being applied to the foodstuff via the handheld utensil 108. The pressure switch may, for example, comprise a simple spring-loaded on/off switch, which is actuated by a downwards movement of the foodstuff engagement member 102 relative to the base unit 202 resulting from the user pressing the handheld utensil 108 onto the foodstuff.

This is particularly advantageous because the user may use both hands to manipulate the handheld utensil 108, rather than, for instance, needing to remove a hand from the handheld utensil 108 in order to operate a switch on the base unit 202 which triggers rotation of the drive system 204. Being able to maintain contact with the handheld utensil 108 with both hands means that the user may exert greater control over the pressure he or she is applying during spiralizing. Two-handed control over the handheld utensil 108 may also make for safer operation of the kitchen appliance 200.

FIG. 6 provides a flowchart of a method 400 of slicing a foodstuff into a strip or strips using a kitchen appliance having a rotational drive system in a base unit thereof, a foodstuff engagement member, and a handheld utensil comprising an outer surface and an inner surface defining a cavity in which a cutter is mounted. The method 400 may, for instance, comprise using the kitchen appliance 200 described above.

In step 410, the foodstuff engagement member engages the drive system. The foodstuff engagement member may then engage with the foodstuff in step 420, so as to enable the foodstuff to be rotated by the drive system. Alternatively, the order of steps 410 and 420 may be reversed, i.e. such that the foodstuff is already engaged by the foodstuff engagement member prior to engagement with the drive system.

In step 430, the outer surface of the handheld utensil is grasped or gripped by the user. The engaged foodstuff is received in the cavity of the handheld utensil in step 440. The user then applies in step 450 a manual force to the outer surface such that the cutter is pressed onto the foodstuff. The foodstuff is rotated in step 470 using the drive system such that the cutter slices the foodstuff into the strip or strips.

The method 400 may further comprise sensing a pressure applied during the applying step 450. In this embodiment, the rotating 470 comprises controlling the drive system in response to the sensed pressure.

In an embodiment, the controlling comprises triggering rotation of the drive system when the sensed pressure reaches or exceeds a threshold pressure, and stopping or preventing rotation of the drive system when the sensed pressure is below the threshold pressure. This means that the user may maintain both hands on the handheld utensil, as previously described. The sensing and triggering may be implemented using, for instance, the pressure switch and/or sensor and controller arrangement described above.

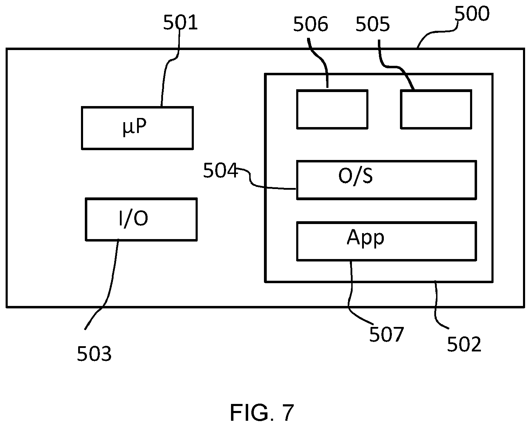

FIG. 7 illustrates an example of a computer 500 for implementing the controller 312 described above.

The computer 500 includes, but is not limited to, PCs, workstations, laptops, PDAs, palm devices, servers, storages, and the like. Generally, in terms of hardware architecture, the computer 500 may include one or more processors 501, memory 502, and one or more I/O devices 503 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 501 is a hardware device for executing software that can be stored in the memory 502. The processor 501 can be virtually any custom made or commercially available processor, a central processing unit (CPU), a digital signal processor (DSP), or an auxiliary processor among several processors associated with the computer 500, and the processor 501 may be a semiconductor based microprocessor (in the form of a microchip) or a microprocessor.

The memory 502 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 502 may incorporate electronic, magnetic, optical, and/or other types of storage media. Note that the memory 502 can have a distributed architecture, where various components are situated remote from one another, but can be accessed by the processor 501.

The software in the memory 502 may include one or more separate programs, each of which comprises an ordered listing of executable instructions for implementing logical functions. The software in the memory 502 includes a suitable operating system (O/S) 504, compiler 505, source code 506, and one or more applications 507 in accordance with exemplary embodiments.

The application 507 comprises numerous functional components such as computational units, logic, functional units, processes, operations, virtual entities, and/or modules.

The operating system 504 controls the execution of computer programs, and provides scheduling, input-output control, file and data management, memory management, and communication control and related services.

Application 507 may be a source program, executable program (object code), script, or any other entity comprising a set of instructions to be performed. When a source program, then the program is usually translated via a compiler (such as the compiler 505), assembler, interpreter, or the like, which may or may not be included within the memory 502, so as to operate properly in connection with the operating system 504. Furthermore, the application 507 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 503 may include input devices such as, for example but not limited to, a mouse, keyboard, scanner, microphone, camera, etc. Furthermore, the I/O devices 503 may also include output devices, for example but not limited to a printer, display, etc. Finally, the I/O devices 503 may further include devices that communicate both inputs and outputs, for instance but not limited to, a network interface controller (NIC) or modulator/demodulator (for accessing remote devices, other files, devices, systems, or a network), a radio frequency (RF) or other transceiver, a telephonic interface, a bridge, a router, etc. The I/O devices 503 also include components for communicating over various networks, such as the Internet or intranet.

When the computer 500 is in operation, the processor 501 is configured to execute software stored within the memory 502, to communicate data to and from the memory 502, and to generally control operations of the computer 500 pursuant to the software. The application 507 and the operating system 504 are read, in whole or in part, by the processor 501, perhaps buffered within the processor 501, and then executed.

When the application 507 is implemented in software it should be noted that the application 507 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A kit (100) for providing a kitchen appliance having a rotational drive system in a base unit thereof with a spiralizing function which enables slicing of a foodstuff into at least one strip, the kit comprising:
a foodstuff engagement member (102) adapted to engage with both the drive system and the foodstuff so as to enable the foodstuff to be rotated by the drive system; and
a utensil (108) for pressing onto the foodstuff as the foodstuff is being rotated, the utensil comprising:
a housing (110) having an inner surface defining a cavity (112) for receiving the rotating foodstuff, and a graspable outer surface; and
a cutter (114), the cutter being arranged to contact the foodstuff when the utensil is being pressed onto the rotating foodstuff so as to enable slicing of the foodstuff into said at least one strip,
**characterized in that**
the utensil (108) is handheld, and **in that** the cutter (114) is mounted in the cavity.

2. The kit (100) according to claim 1, wherein the handheld utensil (108) comprises an aperture (116) delimited by the housing (110), said aperture being adjacent the cutter (114) so as to permit the at least one strip to exit the handheld utensil.

3. The kit (100) according to claim 1 or claim 2, wherein the foodstuff engagement member (102) comprises a plurality of projections (106) for penetrating into the foodstuff.

4. The kit (100) according to any of claims 1 to 3, wherein the graspable outer surface comprises a grip portion (118) including a non-slip plastic or rubber.

5. The kit (100) according to any of claims 1 to 4, wherein the cutter (114) is statically mounted in the cavity (112).

6. The kit (100) according to any of claims 1 to 5, wherein the cutter (114) is mounted at the base of the cavity (112).

7. The kit (100) according to any of claims 1 to 6, wherein the cavity (112) is a sliding fit over the foodstuff engagement member (102).

8. A kitchen appliance (200) having a spiralizing function which enables slicing of a foodstuff into at least one strip, the kitchen appliance comprising:
a base unit (202) having a rotational drive system (204); and
a kit (100) as claimed in any one of claims 1 to 7.

9. The kitchen appliance (200) according to claim 8, comprising a pressure switch adapted to trigger rotation of the drive system (204) in response to a pressure being applied to the foodstuff via the handheld utensil (108), said switch optionally being further adapted to cause rotation of the drive system to cease when said pressure is no longer being applied to the foodstuff via the handheld utensil.

10. The kitchen appliance (200) according to claim 8 or claim 9, comprising:
a sensor (310) for sensing the pressure applied to the foodstuff via the handheld utensil (108); and
a controller (312) in communication with the sensor, said controller being configured to control the drive system (204) in response to the pressure sensed by the sensor.

11. The kitchen appliance (200) according to claim 10, wherein the controller (312) is configured to:
trigger rotation of the drive system (204) when the pressure sensed by the sensor (310) reaches or exceeds a threshold pressure; and
stop or prevent rotation of the drive system when the pressure sensed by the sensor is below said threshold pressure.

12. The kitchen appliance (200) according to any of claims 8 to 11, comprising a container (206) for receiving the at least one strip from the handheld utensil (108), wherein the container is detachably mounted on the base unit (202).

13. A method (400) of slicing a foodstuff into at least one strip using a kitchen appliance having a rotational drive system in a base unit thereof, a foodstuff engagement member, and a handheld utensil comprising an outer surface and an inner surface defining a cavity in which a cutter is mounted, the method comprising:
engaging (410) the foodstuff engagement member with the drive system;
engaging (420) the foodstuff engagement member with the foodstuff so as to enable the foodstuff to be rotated by the drive system;
grasping (430) the outer surface of the handheld utensil;
receiving (440) the engaged foodstuff in the cavity of the handheld utensil;
applying (450) a manual force to the outer surface such that the cutter is pressed onto the foodstuff; and
rotating (470) the foodstuff using the drive system such that the cutter slices the foodstuff into said at least one strip.

14. The method (400) according to claim 13, further comprising sensing (460) a pressure applied during the applying (450), wherein the rotating (470) comprises controlling the drive system in response to the sensed pressure.

15. The method (400) according to claim 14, wherein the controlling comprises:
triggering rotation of the drive system when the sensed pressure reaches or exceeds a threshold pressure; and
stopping or preventing rotation of the drive system when the sensed pressure is below said threshold pressure.

## Patentansprüche

1. Kit (100) zum Bereitstellen für ein Küchengerät, das ein Drehantriebssystem in einer Basiseinheit davon aufweist, einer Spiralschneidfunktion, die das Schneiden eines Lebensmittels in mindestens einen Streifen ermöglicht, wobevvi das Kit Folgendes umfasst: ein Lebensmitteleingriffselement (102), das dazu angepasst ist, sowohl in das Antriebssystem als auch in das Lebensmittel derart einzugreifen, dass es dem Lebensmittel ermöglicht wird, von dem Antriebssystem gedreht zu werden; und
ein Utensil (108) zum Drücken auf das Lebensmittel, während das Lebensmittel gedreht wird,
wobei das Utensil Folgendes umfasst:
ein Gehäuse (110), das eine Innenoberfläche aufweist, die einen Hohlraum (112) zum Aufnehmen des sich drehenden Lebensmittels definiert, und eine ergreifbare Außenoberfläche; und
einen Cutter (114), wobei der Cutter dazu eingerichtet ist, das Lebensmittel zu berühren, wenn das Utensil auf das sich drehende Lebensmittel gedrückt wird, so dass das Schneiden des Lebensmittels in den mindestens einen Streifen ermöglicht wird,
**dadurch gekennzeichnet, dass**
das Utensil (108) handgehalten ist, und dass der Cutter (114) in dem Hohlraum montiert ist.

2. Kit (100) nach Anspruch 1, wobei das handgehaltene Utensil (108) eine Öffnung (116) umfasst, die von dem Gehäuse (110) abgegrenzt ist, wobei die Öffnung an den Cutter (114) angrenzt, um es dem mindestens einen Streifen zu erlauben, aus dem handgehaltenen Utensil auszutreten.

3. Kit (100) nach Anspruch 1 oder Anspruch 2, wobei das Lebensmitteleingriffselement (102) eine Vielzahl von Vorsprüngen (106) zum Eindringen in das Lebensmittel umfasst.

4. Kit (100) nach einem der Ansprüche 1 bis 3, wobei die ergreifbare Außenoberfläche einen Griffabschnitt (118) umfasst, der einen nicht rutschenden Kunststoff oder Gummi beinhaltet.

5. Kit (100) nach einem der Ansprüche 1 bis 4, wobei der Cutter (114) statisch in dem Hohlraum (112) montiert ist.

6. Kit (100) nach einem der Ansprüche 1 bis 5, wobei der Cutter (114) an der Basis des Hohlraums (112) montiert ist.

7. Kit (100) nach einem der Ansprüche 1 bis 6, wobei der Hohlraum (112) gleitend über das Lebensmitteleingriffselement (102) passt.

8. Küchengerät (200), das eine Spiralschneidfunktion aufweist, die das Schneiden eines Lebensmittels in mindestens einen Streifen ermöglicht, wobei das Küchengerät Folgendes umfasst: eine Basiseinheit (202), die ein Drehantriebssystem (204) aufweist; und
ein Kit (100) nach einem der Ansprüche 1 bis 7.

9. Gerät (200) nach Anspruch 8, das einen Druckschalter umfasst, der dazu angepasst ist, Drehung des Antriebssystems (204) als Reaktion auf einen Druck auszulösen, der an das Lebensmittel über das handgehaltene Utensil (108) angelegt wird, wobei der Schalter wahlweise weiter dazu angepasst ist, Stoppen der Drehung des Antriebssystems zu verursachen, wenn der Druck nicht mehr an das Lebensmittel über das handgehaltene Utensil angelegt wird.

10. Küchengerät (200) nach Anspruch 8 oder Anspruch 9, das Folgendes umfasst: einen Sensor (310) zum Abtasten des Drucks, der an das Lebensmittel über das handgehaltene Utensil (108) angelegt wird; und
eine Steuervorrichtung (312) in Kommunikation mit dem Sensor, wobei die Steuervorrichtung dazu konfiguriert ist, das Antriebssystem (204) als Reaktion auf den Druck, der von dem Sensor abgetastet wird, zu steuern.

11. Küchengerät (200) nach Anspruch 10, wobei die Steuervorrichtung (312) dazu konfiguriert ist:
Drehung des Antriebssystems (204) auszulösen, wenn der Druck, der von dem Sensor (310) abgetastet wird, einen Schwellendruck erreicht oder überschreitet; und
die Drehung des Antriebssystems zu stoppen oder zu verhindern, wenn der Druck, der von dem Sensor abgetastet wird, unter dem Schwellendruck liegt.

12. Küchengerät (200) nach einem der Ansprüche 8 bis 11, das einen Behälter (206) zum Aufnehmen mindestens eines Streifens von dem handgehaltenen Utensil (108) umfasst, wobei der Behälter lösbar auf der Basiseinheit (202) montiert ist.

13. Verfahren (400) zum Schneiden eines Lebensmittels in mindestens einen Streifen unter Verwenden eines Küchengeräts, das ein Drehantriebssystem in einer Basiseinheit davon aufweist, ein Lebensmitteleingriffselement und ein handgehaltenes Utensil, das eine Außenoberfläche und eine Innenoberfläche, die einen Hohlraum, in dem ein Cutter montiert ist, definiert, wobei das Verfahren Folgendes umfasst: Eingreifen (410) des Lebensmitteleingriffselements in das Antriebssystem; Eingreifen (420) des Lebensmitteleingriffselements in das Lebensmittel derart, dass es dem Lebensmittel ermöglicht wird, von dem Antriebssystem gedreht zu werden;
Ergreifen (430) der Außenoberfläche des handgehaltenen Utensils;
Aufnehmen (440) des eingegriffenen Lebensmittels in dem Hohlraum des handgehaltenen Utensils;
Anlegen (450) einer manuellen Kraft an die äußere Oberfläche derart, dass der Cutter auf das Lebensmittel gedrückt wird; und
Drehen (470) des Lebensmittels unter Verwenden des Antriebssystems derart, dass der Cutter das Lebensmittel in den mindestens einen Streifen schneidet.

14. Verfahren (400) nach Anspruch 13, das weiter das Abtasten (460) eines Drucks umfasst, der während des Anlegens (450) angelegt wird, wobei das Drehen (470) das Steuern des Antriebssystems als Reaktion auf den abgetasteten Druck umfasst.

15. Verfahren (400) nach Anspruch 14, wobei das Steuern Folgendes umfasst: Auslösen der Drehung des Antriebssystems, wenn der abgetastete Druck einen Schwellendruck erreicht oder überschreitet; und Stoppen oder Verhindern der Drehung des Antriebssystems, wenn der abgetastete Druck unter dem Schwellendruck liegt.

## Revendications

1. Un kit (100) pour fournir un appareil de cuisine possédant un système d'entraînement rotatif dans une unité de base, avec une fonction de mise en spirale qui permet de trancher un produit alimentaire en au moins une bande, le kit comprend:
un élément de prise de produits alimentaires (102) adapté pour entraîner à la fois le système et les produits alimentaires pour permettre aux produits alimentaires de tourner grâce au système d'entraînement; et un ustensile (108) pour appuyer sur le produit alimentaire lorsqu'il est en train de tourner,
l'ustensile comprend:
un boîtier (110) possédant une surface intérieure définissant une cavité (112) pour recevoir le produit alimentaire en train de tourner et une surface extérieure saisissable; et
un cutter (114), un cutter étant disposé pour entrer en contact avec le produit alimentaire lorsque l'ustensile s'appuie sur le produit alimentaire en tournant pour trancher le produit alimentaire en une bande,
**caractérisé par le fait:**
l'ustensile (108) est portatif, et le cutter (114) est monté dans la cavité.

2. Le kit (100) selon la revendication 1, où l'ustensile portatif (108) comprend une ouverture (116) est délimité par le boîtier (110), ladite ouverture étant adjacente au cutter (114) permet à la dernière bande de se détacher de l'ustensile portatif.

3. Le kit (100) selon la revendication 1 ou 2, où l'élément de prise de produits alimentaires (102) comprend une pluralité de projections (106) pour pénétrer dans les produits alimentaires.

4. Le kit (100) selon l'une quelconque 1 à 3, où la surface extérieure saisissable comprend une partie de préhension (118) comprenant un plastique ou un caoutchouc antidérapant.

5. Le kit (100) selon l'une quelconque des revendications 1 à 4, où le cutter (114) est monté de manière statique dans la cavité (112).

6. Le kit (100) selon l'une quelconque des revendications 1 à 5, où le cutter (114) est monté à la base de la cavité (112).

7. Le kit (100) selon l'une quelconque des revendications 1 à 6, où la cavité (112) est un ajustement glissant sur l'élément de prise du produit alimentaire (102).

8. Un appareil de cuisine (200) possédant une fonction de mise en spirale qui permet de trancher un produit alimentaire en une bande, l'appareil de cuisine comprend:
une unité de base (202) possédant un système d'entraînement rotatif (204); et
un kit (100) comme revendiqué selon l'une des revendications 1 à 7.

9. L'appareil de cuisine (200) selon la revendication 8, comprend un commutateur de pression adapté pour déclencher le système d'entraînement de rotation (204) en réponse à une pression appliquée au produit alimentaire à travers l'ustensile portatif (108), ledit interrupteur étant en outre éventuellement adapté pour causer la rotation du système d'entraînement pour s'arrêter lorsque ladite pression n'est plus appliquée au produit alimentaire à travers l'ustensile portatif.

10. L'appareil de cuisine (200) selon la revendication 8 ou 9 comprend: un capteur (310) pour détecter la pression appliquée au produit à travers l'ustensile portatif (108); et
un contrôleur (312) en communication avec le capteur, ledit contrôleur étant configuré pour contrôler le système d'entraînement (204) en réponse à la pression détectée par le capteur.

11. Un appareil de cuisine (200) selon la revendication 10, où le contrôleur (312) est configuré pour:
déclencher la rotation du système d'entraînement (204) où la pression détectée par le capteur (310) atteint ou dépasse un seuil de pression; et
arrêter ou empêcher la rotation du système d'entraînement lorsque la pression détectée par le capteur est en dessous du seuil de pression.

12. L'appareil de cuisine (200) selon l'une quelconque des revendications 8 à 11, comprend un contenant (206) pour recevoir au moins une bande de l'ustensile portatif (108), où le contenant est monté de manière amovible sur l'unité de base (202).

13. Une méthode (400) pour trancher un produit alimentaire en au moins une bande en utilisant un appareil de cuisine possédant un système d'entraînement rotatif dans une unité de base de celui-ci, un produit alimentaire et un ustensile portatif comprenant une surface extérieure et une surface intérieure définissant une cavité dans laquelle un cutter est monté, la méthode comprend:
l'entraînement de (410) l'élément de prise du produit alimentaire avec le système d'entraînement;
l'entraînement de (420) l'élément de prise du produit alimentaire avec le produit alimentaire pour permettre au produit alimentaire de tourner grâce au système d'entraînement;
la prise en main de (430) la surface extérieure de l'ustensile portatif;
la réception du (440) produit alimentaire entraîné dans la cavité de l'ustensile portatif;
l'application (450) d'une force manuelle sur la surface extérieure de telle sorte que le cutter s' appuie sur le produit alimentaire; et
fait tourner (470) le produit alimentaire en utilisant le système d'entraînement de telle sorte que le cutter tranche le produit alimentaire en ladite dernière bande.

14. La méthode (400) selon la revendication 13, comprend également la détection (460) d'une pression appliquée lors de l'application (450), où la rotation (470) comprend le contrôle du système d'entraînement en réponse à la pression détectée.

15. La méthode (400) selon la revendication 14, où le contrôle comprend:
le déclenchement de la rotation du système d'entraînement où la pression détectée atteint ou
dépasse le seuil de pression; et
arrête ou empêche la rotation du système d'entraînement lorsque la pression détectée par le capteur est en dessous du seuil de pression.
